(19) Europäisches Patentamt / European Patent Office / Office européen des brevets

(11) **EP 4 810 541 A1**

(12) **EUROPEAN PATENT APPLICATION**
published in accordance with Art. 153(4) EPC

(43) Date of publication:
**23.09.2026 Bulletin 2026/39**

(21) Application number: **24891848.4**

(22) Date of filing: **13.11.2024**

(51) International Patent Classification (IPC):
***C08G 69/32*** *(2006.01)* ***C08G 69/42*** *(2006.01)*
***H01M 4/62*** *(2006.01)* ***H01M 4/13*** *(2010.01)*
***H01M 10/052*** *(2010.01)* ***H01M 4/02*** *(2006.01)*

(52) Cooperative Patent Classification (CPC):
**C08G 69/32; C08G 69/42; H01M 4/02; H01M 4/13; H01M 4/62; H01M 10/052;** Y02E 60/10

(86) International application number:
**PCT/KR2024/096467**

(87) International publication number:
**WO 2025/105902 (22.05.2025 Gazette 2025/21)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **13.11.2023 KR 20230156397**

(71) Applicant: **Hansol Chemical Co., Ltd**
**Seoul 06169 (KR)**

(72) Inventors:
- **SEONG, Hoon-Moh**
  **Wanju-gun, Jeonbuk-do 55321 (KR)**
- **KIM, Kwang-In**
  **Wanju-gun, Jeonbuk-do 55321 (KR)**
- **LEE, So-Jeong**
  **Wanju-gun, Jeonbuk-do 55321 (KR)**
- **KIM, Hee-Jeong**
  **Wanju-gun, Jeonbuk-do 55321 (KR)**
- **KWON, Se-Man**
  **Wanju-gun, Jeonbuk-do 55321 (KR)**

(74) Representative: **Cabinet Chaillot**
**16/20, avenue de l'Agent Sarre**
**B.P. 74**
**92703 Colombes Cedex (FR)**

# (54) BINDER COMPRISING POLYAMIDE POLYMER, CATHODE FOR SECONDARY BATTERY COMPRISING BINDER, AND SECONDARY BATTERY COMPRISING CATHODE

(57) The present invention relates to a polyamide polymer, a binder for a cathode comprising same, a cathode slurry, a cathode, and a secondary battery, wherein the polyamide polymer comprises a diamine monomer unit including a sulfone, a diamine monomer unit including carboxylic acid, and a monomer unit including at least one aromatic ring.

(a)

(b)
Gelation

Figure 1



Processed by Luminess, 75001 PARIS (FR)

# Description

## Technical Field

The present disclosure relates to a binder for a cathode including a polyamide polymer, a slurry including the same, an electrode, and a secondary battery.

## Background Art

Lithium secondary batteries, due to their high energy density, are widely used across electrical, electronics, telecommunications, and computer industries. Started with compact power sources for portable electronic devices, the application of lithium secondary batteries is expanding to high-capacity systems for hybrid and electric vehicles.

To implement a lithium secondary battery with high energy density and excellent cycle life, it is desirable to increase the contents of electrode active materials and conductive agents within an electrode, while decreasing the binder content.

However, a lower binder content generally leads to reduction in dispersibility of the electrode active material and/or conductive agent, adhesiveness, and flexibility of the electrode active material layer. Consequently, the electrode active material becomes detached from a current collector during repeated charge-discharge cycles, resulting in degradation of cycle characteristics.

Accordingly, there is a demand for a binder capable of ensuring dispersibility of the electrode active material and/or conductive agent within the electrode, electrode plate adhesiveness, and electrode plate flexibility, even with a small amount.

For example, fluorine-based binders, such as polyvinylidene fluoride (PVDF) containing no polar group, undergo low swelling in organic electrolyte solutions, thereby facilitating maintenance of electrode structural integrity during battery operation and improving dispersibility of active materials.

However, PVDF suffers from insufficient conductive agent dispersibility, low electrode plate adhesiveness, and limited electrode plate flexibility. In particular, prolonged exposure to basic conditions causes PVDF to degrade, leading to release of HF gas, which poses the problem of deteriorating stability.

Additionally, non-fluorine-based binders, such as hydrogenated acrylonitrile-butadiene binder, offer improved conductive agent dispersibility and electrode plate flexibility compared to fluorine-based binders, but still fail to achieve sufficient adhesiveness.

Therefore, there is a need for a binder that can overcome the limitations of the related art by simultaneously ensuring improved adhesiveness and enhanced flexibility while providing superior stability, thereby improving cycle life characteristics of lithium secondary batteries.

[Documents of Related Art]

[Patent Documents]

(Patent Document 1) Korean Patent Application Publication No. 10-2016-0040125

## Disclosure

## Technical Problem

Accordingly, one objective of the present disclosure is to provide a polyamide polymer for a binder for a cathode, in which the polyamide polymer exhibits enhanced adhesiveness characteristics and preventing electrode delamination caused by lithium ion migration, thereby improving the electrochemical and cycle life characteristics of a secondary battery.

Another objective of the present disclosure is to provide a binder for a cathode, in which the binder does not generate harmful gases even after prolonged exposure to alkaline conditions, thereby improving the stability and cycle life of a secondary battery.

Another objective of the present disclosure is to provide a slurry composition capable of improving the characteristics of a secondary battery through the use of the polyamide polymer for the binder.

Another objective of the present disclosure is to provide a high-performance electrode (particularly, a cathode) to which the slurry composition is applied, and a low-cost, high-performance secondary battery including the same.

However, the objectives of the present disclosure are not limited to those mentioned above, and other objectives not mentioned will be clearly understood by those skilled in the art from the description provided hereinafter.

## Technical Solution

According to one aspect of the present disclosure, there is provided a polyamide polymer, including: a diamine monomer unit including a sulfone; a diamine monomer unit including a carboxylic acid; and a monomer unit including at least one aromatic ring.

According to another aspect of the present disclosure, there is provided a binder for a cathode, the binder including:
the polyamide polymer.

According to another aspect of the present disclosure,

there is provided a cathode slurry, including: the binder; and
a cathode active material.

According to another aspect of the present disclosure,

there is provided a cathode, including: a current collector; and
a cathode active material layer formed on the current collector and including the binder.

According to another aspect of the present disclosure,

there is provided a secondary battery, including:
the cathode.

## Advantageous Effects

A binder for a cathode according to the present disclosure exhibits excellent adhesiveness characteristics, thereby improving the electrochemical characteristics of a secondary battery.

Additionally, the binder according to the present disclosure does not generate harmful gases (e.g., hydrogen fluoride) even after prolonged exposure to alkaline conditions, thereby improving the stability and cycle life of a secondary battery.

Furthermore, the improved adhesiveness of the binder according to the present disclosure enables a reduction in binder content while increasing the contents of active material and conductive agent, thereby providing a lithium secondary battery with high energy density at low cost.

## Description of Drawings

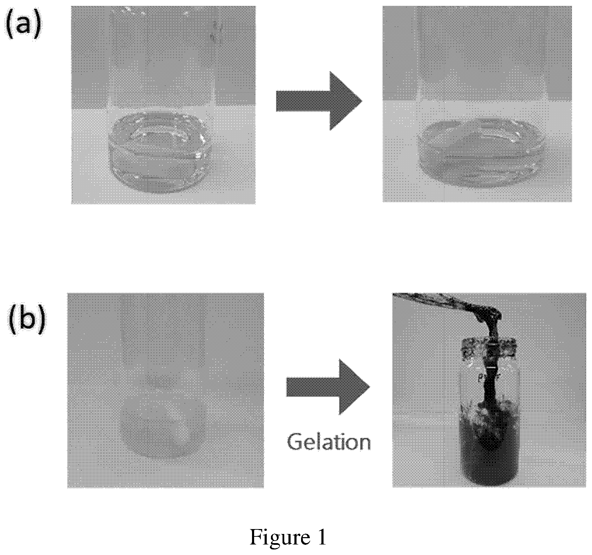

FIG. 1a illustrates the alkali resistance measurement results of a polymer for a binder of Example 1 according to Evaluation Example 1, and FIG. 1b illustrates the alkali resistance measurement results of a polymer for a binder of Comparative Example 4 according to Evaluation Example 1.

## Best Mode

Hereinafter, the operation and effect of the present disclosure will be described in more detail through specific embodiments of the present disclosure. However, these embodiments are provided only for illustrative purposes and not intended for limiting the scope of the present disclosure.

All terms or words used in the specification and claims have the same meaning as commonly understood by one of ordinary skill in the art to which inventive concepts belong. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

Therefore, embodiments disclosed herein are merely preferred examples of the present disclosure and do not fully describe the technical idea of the present disclosure, so it will be appreciated that there can be various equivalents and alterations thereto at a filing date of the present application.

As used herein, the singular forms are intended to include the plural forms as well, unless the context clearly indicates otherwise. It will be further understood that the terms "comprise", "include", "have", etc., when used in this specification, specify the presence of stated features, integers, steps, operations, elements, components, and/or combinations thereof but do not preclude the presence or addition of one or more other features, integers, steps, operations, elements, components, and/or combinations thereof.

In this specification, "a to b" and "a~b" indicating a numerical range are defined as ≥ a and ≤ b.

A polyamide polymer according to one aspect of the present disclosure may include a diamine monomer unit including a sulfone, a diamine monomer unit including a carboxylic acid, and a monomer unit including at least one aromatic ring.

The polyamide polymer may not include an aliphatic ring or an aliphatic chain structure in its backbone (it may include an aliphatic ring or an aliphatic chain structure as a terminal group other than the backbone).

When a polyamide polymer includes an aliphatic ring or aliphatic chain structure in the backbone, an electrode expansion suppression effect may be low compared to a polyamide polymer including a monomer unit including at least an aromatic ring, precipitation caused by reduced solubility may occur, and electric resistance of a battery may increase, making it difficult to use as a binder.

An electrode binder including the polyamide polymer may exhibit superior electrolyte solution stability compared to a conventional electrode binder including a PVDF-based polymer, due to reduced swelling caused by the electrolyte solution. Accordingly, volumetric expansion of a cell may also be reduced, thereby improving battery stability and cycle life.

The polyamide polymer does not contain fluorine atoms and may therefore not generate hydrogen fluoride during charging and discharging of a battery in which the binder is used.

On the contrary, currently commercialized PVDF-based binders contain fluorine atoms and have the drawback of generating hydrogen fluoride during charging and discharging of a battery.

Meanwhile, the monomer unit including the sulfone may also include an aromatic ring. The sulfone and/or the aromatic ring of the monomer unit including the sulfone may be used to form a part of the backbone of the polyamide polymer. That is, the polyamide polymer may include the sulfone in the backbone.

The monomer unit including the sulfone may contribute to improving the adhesiveness characteristics of the polyamide polymer. Additionally, it may greatly contribute to improving the characteristics of a battery. This is because the improved adhesiveness characteristics of the polyamide polymer help prevent electrode delamination during charging and discharging of a battery, thereby maintaining battery cycle life, while the sulfone group of the polyamide polymer forms a passivation layer (stable protective layer) on the surface of a cathode of the battery, thereby improving charge/discharge characteristics of the battery.

Additionally, the monomer unit including the sulfone may also contribute to improving the initial coulombic efficiency of a battery.

The diamine monomer unit including the carboxylic acid may include one or more carboxylic acids, and the carboxylic acid may be a substituent on an aromatic ring.

When used in an appropriate amount, the diamine monomer unit including the carboxylic acid may improve battery performance while enhancing the adhesiveness of the polyamide polymer.

The at least one aromatic ring may be used to form a part of the backbone of the polyamide polymer. That is, the polyamide polymer may include an aromatic ring in the backbone.

The monomer unit including the at least one aromatic ring needs to be polymerized with a diamine monomer to produce a polyamide polymer, and may include a substituent that enables such polymerization.

In one embodiment, a monomer that forms the monomer unit including the sulfone through polymerization may be bis(4-aminophenyl)sulfone, bis(3-aminophenyl)sulfone, 3,3'-diaminophenyl sulfone, 3,4'-diaminophenyl sulfone, 4,4'-diaminophenyl sulfone, 1,3-bis(3-aminophenyl sulfone)benzene, 1,3-bis(3-aminophenyl) sulfone, 1,3-bis(4-aminophenyl sulfone)benzene, 1,3-bis(4-aminophenyl) sulfone, 1,4-bis(4-aminophenyl sulfone)benzene, 1,4-bis(4-aminophenyl) sulfone, bis[3-(3-aminophenoxy)phenyl]sulfone, bis[3-(4-aminophenoxy)phenyl)sulfone, bis[4-(3-aminophenoxy)phenyl]sulfone, bis[-(4-aminophenoxy)phenyl)sulfone, or a combination thereof.

In particular, when bis(4-aminophenyl)sulfone is used, the adhesiveness characteristics of the polyamide polymer may be significantly improved. Additionally, the use of bis(4-aminophenyl)sulfone in a cathode of a battery may greatly contribute to improving the characteristics of the battery (e.g., initial coulombic efficiency characteristics and the like of the battery).

In one embodiment, a monomer that forms the diamine monomer unit including the carboxylic acid through polymerization may be 3,5-diaminobenzoic acid (DABA).

The carboxylic acid of the 3,5-diaminobenzoic acid may contribute to improving the adhesiveness to an aluminum current collector.

In one embodiment, a monomer that forms the monomer unit including the at least one aromatic ring through polymerization may be a terephthaloyl chloride monomer, an isophthaloyl chloride monomer, a phthalic acid monomer, an isophthalic acid monomer, a terephthalic acid monomer, or a combination thereof.

In one embodiment, the molar ratio of the terephthaloyl chloride to the isophthaloyl chloride used in polymerization of the polyamide polymer (mol% of the terephthaloyl chloride: mol% of the isophthaloyl chloride) may be 1:9 to 9:1.

For example, the molar ratio of the terephthaloyl chloride to the isophthaloyl chloride may be 8:2 to 2:8 or 3:7 to 7:3.

That is, for polymerization of the polyamide polymer of the present disclosure, both the terephthaloyl chloride and

the isophthaloyl chloride may be used.

In one embodiment, the molar ratio of the diamine monomer including the sulfone to the diamine monomer including the carboxylic acid used in polymerization of the polyamide polymer (mol% of the diamine monomer including the sulfone: mol% of the diamine monomer including the carboxylic acid) may be 9.9:0.1 to 6:4.

For example, the molar ratio of the diamine monomer including the sulfone to the diamine monomer including the carboxylic acid may be 9.5:0.5 to 6:4, 9.5:0.5 to 7:3, 9.5:0.5 to 8:2, 9.0:1.0 to 6:4, 9.0:1.0 to 7:3, or 9.0:1.0 to 8:2.

When the amount of the diamine monomer including the carboxylic acid exceeds the range defined herein, a lower molecular weight of the diamine monomer including the carboxylic acid compared to the diamine monomer including the sulfone may limit the molecular weight increase, leading to reduced adhesiveness and degraded battery performance.

On the other hand, when the amount of the diamine monomer including the carboxylic acid falls below the range defined herein, adhesiveness may be reduced and battery performance may be degraded.

In one embodiment, the polyamide polymer may include a monomer repeating unit represented by Formula 1 below:

[Formula 1]

$$\left[ -\overset{O}{\overset{\|}{C}}-X_1-\overset{O}{\overset{\|}{C}}- \right]_n \left[ -NH-X_2-NH- \right]_m$$

In Formula 1 above,

X1 may include at least one aromatic ring substituted with a halogen element, hydrogen, a hydroxyl group, a carboxyl group, a linear or branched hydrocarbon group having 1 to 4 carbon atoms, or a combination thereof,

X2 may include: two aromatic rings connected to each other by $-SO_2-$, the two aromatic rings being substituted with a halogen element, hydrogen, a hydroxyl group, a carboxyl group, a linear or branched hydrocarbon group having 1 to 4 carbon atoms substituted or unsubstituted with a halogen element, or a combination thereof; and

an aromatic ring substituted with at least one carboxyl group, and

n+m=1.

In Formula 1 above, n and m represent mole fractions.

In Formula 1 above, the halogen element may not include fluorine.

The monomer unit represented by $X_1$ in Formula 1 above corresponds to a monomer unit including at least one aromatic ring.

For example, a monomer that forms the monomer unit represented by $X_1$ in Formula 1 above through polymerization may be a terephthaloyl chloride monomer, an isophthaloyl chloride monomer, a phthalic acid monomer, an isophthalic acid monomer, a terephthalic acid monomer, or a combination thereof.

Additionally, a monomer that forms the monomer unit represented by $X_2$ in Formula 1 above through polymerization may be a combination of a diamine monomer that includes both a sulfone and at least one aromatic ring, and a diamine monomer that includes a carboxylic acid.

For example, the diamine monomer that include both the sulfone and the at least one aromatic ring and forms the monomer unit represented by $X_2$ in Formula 1 above through polymerization may be bis(4-aminophenyl)sulfone, bis(3-aminophenyl)sulfone, 3,3'-diaminophenyl sulfone, 3,4'-diaminophenyl sulfone, 4,4'-diaminophenyl sulfone, 1,3-bis(3-aminophenyl sulfone)benzene, 1,3-bis(3-aminophenyl) sulfone, 1,3-bis(4-aminophenyl sulfone)benzene, 1,3-bis(4-aminophenyl) sulfone, 1,4-bis(4-aminophenyl sulfone)benzene, 1,4-bis(4-aminophenyl) sulfone, bis[3-(3-aminophenoxy) phenyl]sulfone, bis[3-(4-aminophenoxy)phenyl]sulfone, bis[4-(3-aminophenoxy)phenyl]sulfone, bis[4-(4-aminophenoxy)phenyl)sulfone, or a combination thereof.

Additionally, the diamine monomer that includes the carboxylic acid and forms the monomer unit represented by $X_2$ in Formula 1 above through polymerization may be 3,5-diaminobenzoic acid.

In one embodiment, the polyamide polymer may have a weight average molecular weight of 100,000 to 1,000,000.

Within the range of the weight average molecular weight of the polyamide polymer defined herein, a higher weight average molecular weight may result in increased adhesiveness of the polyamide polymer.

When the weight average molecular weight of the polyamide polymer is less than 100,000, electrolyte solution stability of an electrode binder including the polyamide polymer may deteriorate. Additionally, stability of an electrode slurry including a binder including the polyamide polymer may also deteriorate.

On the other hand, when the weight average molecular weight of the polyamide polymer exceeds 1,000,000, viscosity may increase during slurry preparation, making slurry coating difficult.

A binder for a cathode according to another aspect of the present disclosure may include the polyamide polymer.

A cathode slurry according to another aspect of the present disclosure may include the binder according to the present disclosure and a cathode active material.

A cathode slurry according to another aspect of the present disclosure may include the binder and a cathode active material.

The cathode active material used for electrode formation in the present disclosure is not particularly limited, and any cathode active material known in the art may be employed. Specific examples of the cathode active material may include, but are not limited to: lithium metal; a lithium-cobalt-based oxide such as $LiCoO_2$; a lithium-manganese-based oxide such as $Li_{1+x}Mn_{2-x}O_4$ (wherein, x=0 to 0.33), $LiMnO_3$, $LiMn_2O_3$, and $LiMnO_2$; a lithium-copper-based oxide such as $Li_2CuO_2$; a vanadium oxide such as $LiV_3O_8$, $V_2O_5$, and $Cu_2V_2O_7$; a lithium-nickel-based oxide expressed as $LiNi_{1-x}M_xO_2$ (wherein, M=Co, Mn, Al, Cu, Fe, Mg, B, or Ga and x=0.01 to 0.3); a lithium manganese composite oxide expressed as $LiMn_{2-x}M_xO_2$ (wherein, M=Co, Ni, Fe, Cr, Zn, or Ta, and x=0.01 to 0.1) or $Li_2Mn_3MO_8$ (wherein, M=Fe, Co, Ni, Cu, or Zn); a lithium-nickel-manganese-cobalt-based oxide expressed as $Li(Ni_aCo_bMn_c)O_2$ (wherein, $0 < a < 1$, $0 < b < 1$, $0 < c < 1$, a+b+c=1); a sulfur or disulfide compound; a phosphate such as $LiFePO_4$, $LiMnPO_4$, $LiCoPO_4$, and $LiNiPO_4$; and $Fe_2(MoO_4)_3$.

In this case, the cathode electrode active material layer may further include a dispersant, a conductive agent, a filler, and other additives in addition to the cathode active material.

The cathode active material may be included in an amount of 90 to 99 wt% in terms of solid content. When the amount of the active material is low, a battery may not provide high capacity. On the contrary, when the amount of the active material is excessively high, the relative amounts of the binder and conductive agent are reduced, which may lead to deterioration in electrode adhesiveness and electrical conductivity.

The conductive agent is not particularly limited and may be appropriately selected depending on the type of battery or capacitor. For example, in the case of a lithium-ion secondary battery, a carbon-based material such as graphite and activated carbon may be used, whereas in the case of a nickel-metal hydride secondary battery, cobalt oxide may be used, and for the anode, nickel powder, cobalt oxide, titanium oxide, or carbon may be used.

Examples of the carbon-based material may include acetylene black, furnace black, graphite, carbon fiber, fullerenes, and carbon nanotubes.

The conductive agent is typically used in an amount of 1 to 20 parts by weight, preferably 2 to 10 parts by weight, based on 100 parts by weight of the electrode active material.

Reducing the amount of the conductive agent while increasing the amount of the electrode active material may improve the energy density of a secondary battery. Therefore, it is important to achieve high efficiency even with the same amount of conductive agent.

In an electrode slurry for secondary batteries, the conductive agent exhibits higher conductivity efficiency as it is finely and uniformly dispersed, thereby reducing battery internal resistance and improving output characteristics as well as cycle life characteristics. Whereas, when the conductive agent is coarsely and non-uniformly dispersed, adhesiveness and conductivity may be reduced even with the same amount, which adversely affects the cycle life and output characteristics of the battery. Additionally, when the viscosity of a dispersion is low, the solid content of the slurry may be increased, thereby improving the electrode production speed.

As a binder for a cathode for secondary batteries, in addition to the binder of the present disclosure including the polyamide polymer including a monomer unit with an aromatic ring, any one selected from the group consisting of poly(meth)acrylic acid, poly(meth)acrylamide, carboxymethyl cellulose, polyvinylidene fluoride, a polyhexafluoropropylene-polyvinylidene fluoride copolymer (P(VdF/HFP)), poly(vinyl acetate), polyvinyl alcohol, polyethylene oxide, polyvinylpyrrolidone, alkylated polyethylene oxide, polyvinyl ether, poly(methyl methacrylate), poly(ethyl acrylate), polytetrafluoroethylene, polyvinyl chloride, polyacrylonitrile, polyvinylpyridine, styrene-butadiene rubber, acrylonitrile-butadiene rubber, and copolymers thereof, or a mixture of two or more thereof may be used.

The amount of the binder in the cathode slurry composition is preferably 0.3 to 10 wt% in terms of solid content, and more preferably 0.7 to 8 wt%. When the amount is less than 0.3 wt%, it may be difficult to achieve sufficient adhesiveness within the current collector and the electrode composition. On the other hand, when the amount exceeds 10 wt%, the proportion of the binder in the electrode slurry composition increases, which may reduce battery capacity.

A cathode according to another aspect of the present disclosure may include: a current collector; and an active material layer formed on the current collector and including the binder of the present disclosure.

The cathode may be manufactured through the steps of (a) preparing a composition for forming a cathode active material layer including a cathode active material and the binder of the present disclosure, and (b) applying the composition for forming the cathode active material layer onto a cathode current collector, followed by drying.

The composition for forming the cathode active material layer may be stirred by a conventional method using a conventional mixer, such as a high-shear mixer or a homo mixer.

Step (b) is a step of applying the composition for forming the cathode active material layer prepared in step (a) onto the cathode current collector and then drying the composition, thereby manufacturing a cathode for a lithium secondary battery.

At this time, the method for applying the slurry-type composition for forming the cathode active material layer is not particularly limited. Examples thereof may include doctor blade coating, dip coating, gravure coating, slit die coating, spin coating, comma coating, bar coating, reverse roll coating, screen coating, and cap coating.

After coating and drying, a cathode for a secondary battery (particularly, a lithium secondary battery), in which a cathode active material layer is formed, may be ultimately manufactured.

The current collector may be any electrically conductive material that does not chemically react with the slurry for electrode formation. Representative examples thereof may include aluminum foil and copper foil. A current collector having a thickness of 3 to 50 $\mu$m may be selected and used.

A secondary battery according to another aspect of the present disclosure may include the cathode.

Meanwhile, a secondary battery may be manufactured including a cathode including the binder of the present disclosure, an anode, a separator, and an electrolyte solution.

The separator needs to be an insulator that can separate the anode and the cathode and provide a passage through which only lithium ions can migrate. To this end, the separator requires good wettability to an electrolyte, and may be made of a porous polymer film such as PE/PP or a porous non-woven fabric. To prevent a battery short-circuit, a coated separator having enhanced heat resistance and mechanical strength, such as a ceramic-coated separator, may be used. The coating may be applied in a single layer or multiple layers.

The separator may be composed of a porous substrate. As the porous substrate, any porous substrate commonly used in electrochemical devices may be used. For example, a polyolefin-based porous membrane or a non-woven fabric may be used, but is not particularly limited thereto.

The separator may be a porous substrate made of any one selected from the group consisting of polyethylene, polypropylene, polybutylene, polypentene, polyethylene terephthalate, polybutylene terephthalate, polyester, polyacetal, polyamide, polycarbonate, polyimide, polyetheretherketone, polyethersulfone, polyphenylene oxide, polyphenylene sulfide, and polyethylene naphthalate, or a mixture of two or more thereof.

The electrolyte solution of the lithium secondary battery is a non-aqueous electrolyte containing a lithium salt, and is composed of a lithium salt and a solvent. As the solvent, a non-aqueous organic solvent, an organic solid electrolyte, and an inorganic solid electrolyte may be used.

The lithium salt is a substance that is likely to be dissolved in the non-aqueous electrolyte solution, and examples thereof may include LiCl, LiBr, LiI, $LiClO_4$, $LiBF_4$, $LiB_{10}Cl_{10}$, $LiPF_6$, $LiAsF_6$, $LiSbF_6$, $LiAlCl_4$, LiSCN, $LiC_4BO_8$, $LiCF_3CO_2$, $LiCH_3SO_3$, $LiCF_3SO_3$, $LiN(SO_2CF_3)_2$, $LiN(SO_2F)_2$, $LiN(SO_2C_2F_5)_2$, $LiC_4F_9SO_3$, $LiC(CF_3SO_2)_3$, $(CF_3SO_2)\cdot_2NLi$, lithium chloroborane, lower aliphatic lithium carbonate, lithium tetraphenylborate, and imide.

The non-aqueous organic solvent may be a non-aprotic organic solvent, and examples thereof may include, N-methyl-2-pyrrolidone, propylene carbonate, ethylene carbonate, butylene carbonate, dimethyl carbonate, diethyl carbonate, ethylmethyl carbonate, gamma-butyrolactone, 1,2-dimethoxy ethane, 1,2-diethoxy ethane, tetrahydroxy franc, 2-methyltetrahydrofuran, dimethyl sulfoxide, 1,3-dioxolane, 4-methyl-1,3-dioxene, diethyl ether, formamide, dimethylformamide, dioxolane, acetonitrile, nitromethane, methyl formate, methyl acetate, phosphoric acid triester, trimethoxymethane, dioxolane derivatives, sulfolane, methyl sulfolane, 1,3-dimethyl-2-imidazolidinone, propylene carbonate derivatives, tetrahydrofuran derivatives, ether, methyl propionate, and ethyl propionate.

Examples of the organic solid electrolyte may include polyethylene derivatives, polyethylene oxide derivatives, polypropylene oxide derivatives, phosphoric acid ester polymers, poly agitation lysine, polyester sulfides, polyvinyl alcohols, polyvinylidene fluorides, and polymers having secondary dissociation groups.

Examples of the inorganic solid electrolyte may include nitrides, halides, and sulfates of lithium such as $Li_3N$, LiI, $Li_5NI_2$, $Li_3N$-LiI-LiOH, $LiSiO_4$, $LiSiO_4$-LiI-LiOH, $Li_2SiS_3$, $Li_4SiO_4$, $Li_4SiO_4$-LiI-LiOH, and $Li_3PO_4$-$Li_2S$-$SiS_2$.

Additionally, the non-aqueous electrolyte solution may further include other additives for the purpose of improving charge/discharge characteristics, flame retardancy, and the like. Examples of the additives may include pyridine, triethylphosphite, triethanolamine, cyclic ether, ethylenediamine, n-glyme, hexaphosphate triamide, nitrobenzene derivatives, sulfur, quinone imine dye, N-substituted oxazolidinone, N,N-substituted imidazolidine, ethylene glycol dialkyl ether, ammonium salts, pyrrole, 2-methoxyethanol, aluminum trichloride, fluoroethylene carbonate (FEC), propene sultone (PRS), and vinylene carbonate (VC).

The lithium secondary battery according to the present disclosure may be subjected to not only a conventional winding process but also lamination (stack) and folding processes of the separator and the electrode. Additionally, a casing of the battery may be cylindrical, rectangular, pouch-shaped, or coin-shaped.

## Mode for Invention

Hereinafter, the present disclosure will be described in more detail by way of examples, but the present disclosure

is not limited to these examples.

Preparation Example 1. Preparation of Polymer for Binder

[Example 1]

In a 500 mL four-neck flask under a nitrogen atmosphere, N-methyl-2-pyrrolidone (NMP), bis(4-aminophenyl) sulfone (p-APS), which is a monomer forming a monomer unit including a sulfone, and 3,5-diaminobenzoic acid (DABA), which is a diamine monomer including a carboxylic acid, were added and stirred.

The molar ratio of bis(4-aminophenyl)sulfone to 3,5-diaminobenzoic acid was 9:1.

After lowering the internal temperature of the reactor to equal to or less than 5°C, isophthaloyl chloride (IPC), which is a monomer unit including an aromatic ring, was added and reacted.

Terephthaloyl chloride (TPC), which is a monomer that forms a monomer unit including an aromatic ring, was added and stirred for a sufficient time.

The molar ratio of isophthaloyl chloride to terephthaloyl chloride was 3:7.

An olefin-based neutralizing agent was added to the solution whose viscosity had risen to a predetermined level and stirred to remove hydrogen chloride (HCl) generated during synthesis.

Finally, a polyamide copolymer solution for a binder was prepared with a solid content of 15 wt%.

[Example 2]

A polyamide copolymer solution for a binder was prepared in the same manner as in Example 1, except that the molar ratio of bis(4-aminophenyl)sulfone to 3,5-diaminobenzoic acid was changed to 8:2.

[Comparative Example 1]

A polyamide copolymer solution for a binder was prepared in the same manner as in Example 1, except that the molar ratio of bis(4-aminophenyl)sulfone to 3,5-diaminobenzoic acid was changed to 5:5.

[Comparative Example 2]

A polyamide copolymer solution for a binder was prepared in the same manner as in Example 1, except that the molar ratio of bis(4-aminophenyl)sulfone to 3,5-diaminobenzoic acid was changed to 2:8.

[Comparative Example 3]

A polyamide copolymer solution for a binder was prepared in the same manner as in Example 1, except that the molar ratio of bis(4-aminophenyl)sulfone to 3,5-diaminobenzoic acid was changed to 1:9.

[Comparative Example 4]

A polyamide copolymer solution for a binder was prepared in the same manner as in Example 1, except that 3,5-diaminobenzoic acid was not added (i.e., the molar ratio of bis(4-aminophenyl)sulfone to 3,5-diaminobenzoic acid was 10:0).

[Comparative Example 5]

A PVDF polymer powder from Solvay (weight average molecular weight: 1,000,000; melting point: 150°C to 160°C; glass transition temperature: -40°C) was purchased and dissolved in NMP to prepare a polymer solution with a solid content of 6 wt%, which was then used as a binder.

The monomer compositions of Examples 1 and 2 and Comparative Examples 1 to 4, as well as the molar ratios of p-APS to DABA, are summarized in Table 1 below.

[Table 1]

| | Monomer composition | Molar ratio of p-APS to DABA (p-APS:DABA) |
|---|---|---|
| Example 1 | p-APS / DABA/ TPC / IPC | 9:1 |
| Example 2 | p-APS / DABA/ TPC / IPC | 8:2 |

(continued)

| | Monomer composition | Molar ratio of p-APS to DABA (p-APS:DABA) |
|---|---|---|
| Comparative Example 1 | p-APS / DABA/ TPC / IPC | 5:5 |
| Comparative Example 2 | p-APS / DABA/ TPC / IPC | 2:8 |
| Comparative Example 3 | p-APS / DABA/ TPC / IPC | 1:9 |
| Comparative Example 4 | p-APS / TPC / IPC | 10:0 |
| Comparative Example 5 | PVDF (SOLVAY) | - |

Preparation Example 2. Preparation of Cathode Slurry and Cathode

A cathode active material slurry composition having a solid content of 70 wt% was prepared by mixing 97.5 wt% of NCM811 as a cathode active material, 2 wt% of each of the polymers of Examples 1 and 2 and Comparative Examples 1 to 5, 0.5 wt% of a CNT dispersion, and a remainder of NMP.

Meanwhile, the cathode active material slurry composition may include 96 to 98 wt% of the cathode active material, 1 to 3 wt% of the polymer, and 0.5 to 1 wt% of the CNT dispersion. Additionally, the solid content of the cathode active material slurry composition may be 60 to 75 wt%.

The prepared cathode slurry composition was coated onto an aluminum (Al) foil, which is a cathode current collector with a thickness of 20 μm, using an applicator, and dried in a 130°C convection oven for 1 hour. The dried cathode was then roll-pressed to prepare a cathode.

Preparation Example 3. Manufacture of Cell

A non-aqueous electrolyte containing 1 wt% of 1 M $LiPF_6$, together with fluoroethylene carbonate (FEC), 1 wt% propylene sulfite (PS), and 1 wt% $LiPO_2F_2$, was used as an electrolyte. A polyolefin separator was interposed between a cathode, which prepared according to Preparation Example 2 using a cathode plate fabricated with each of the polymers of Examples 1 and 2 and Comparative Examples 1 to 5, and an anode, and a lithium secondary battery was manufactured as a 2032 coin cell type without distinction of form.

Evaluation Example 1. Evaluation of Alkali Resistance

To artificially create an alkaline environment, 0.1 wt% of LiOH, based on the weight of the NMP solvent, was added to the polymer of Example 1 and to the PVDF polymer of Comparative Example 5 diluted in NMP to the same solid content.

Thereafter, the resulting binder solutions were continuously stirred at room temperature for 5 days while monitoring changes in chemical and physical stability.

As shown in FIG. 1, no significant change was observed for the polymer of Example 1 under the alkaline environment. Whereas, the PVDF polymer of Comparative Example 5 was observed to undergo gelation accompanied by a dark brown coloration.

This phenomenon is attributed to the formation of carbon-carbon double bonds through the reaction between LiOH and PVDF, resulting in phase transition and gelation. It is known that PVDF generates HF gas through a dehydrofluorination reaction under alkaline conditions, and the generated HF gas decomposes the cathode electrolyte interphase (CEI) layer of the cathode and the solid electrolyte interphase (SEI) layer of the anode, thereby deteriorating battery performance. Additionally, the dehydrofluorination reaction is known to be accelerated under high-temperature conditions, further aggravating the degradation of high-temperature battery performance.

That is, it was confirmed that PVDF may generate HF gas under alkaline conditions, thereby potentially causing deterioration in battery performance.

On the contrary, the polyamide polymer of Example 1 exhibited superior alkali resistance compared to the PVDF polymer, thereby maintaining stability under battery operating environments.

Likewise, the polyamide polymer of Example 2 also showed no significant change under the alkaline environment, similar to the polymer of Example 1.

Evaluation Example 2. Measurement of Adhesiveness

The cathodes prepared according to Preparation Example 2 were each dried at 130°C for 1 h and then cut into a size of 15 cm × 2.5 cm.

Thereafter, the coated surface of the cathode was adhered to an acrylic plate with a double-sided adhesive tape attached, pressed 3 to 4 times with a rubber roller for pressing to prepare a peel-off test sample.

The prepared sample was loaded into a universal testing machine (UTM) for measuring adhesion strength, and subjected to a 2.5 cm 180° peel test. The loading value (gf/25mm) was measured to calculate adhesiveness of the cathodes.

The calculated adhesiveness values of the cathodes are summarized in Table 2 below.

[Table 2]

| Polymer for binder | Cathode adhesiveness (gf/25mm) |
|---|---|
| Example 1 | 20.4 |
| Example 2 | 19.2 |
| Comparative Example 1 | 17.6 |
| Comparative Example 2 | 15.2 |
| Comparative Example 3 | 13.1 |
| Comparative Example 4 | 18.9 |
| Comparative Example 5 | 18.1 |

As shown in Table 2 above, the polymers of Examples 1 and 2 exhibited an adhesiveness of equal to or greater than 19 gf/25 mm. It was confirmed that the polymers of Examples 1 and 2 provided improved adhesiveness compared to the polyamide polymer of Comparative Example 4, in which DABA was not used as a monomer, or the PVDF polymer of Comparative Example 5.

Additionally, it was observed that the cathode adhesiveness decreased as the content of DABA increased in the molar ratio of p-APS to DABA (mol% of p-APS: mol% of DABA).

That is, the polymers of Comparative Examples 1 to 3, in which the molar ratio of p-APS to DABA ranged from 5:5 to 1:9, were found to exhibit lower cathode adhesiveness even compared to the polymer of Comparative Example 4, which did not contain DABA, and the PVDF polymer of Comparative Example 5.

Evaluation Example 3. Measurement of Battery Performance

The cells manufactured according to Preparation Example 3 using the cathode plates fabricated with the polymers of Examples 1 and 2 and Comparative Examples 1 to 5 were subjected to an initial formation process. Specifically, the cells were charged to 4.2 V at a 0.1 C rate in CC/CV mode and discharged to 2.8 V at a 0.1 C rate, followed by charging to 4.2 V at a 0.2 C rate and discharging to 2.8 V at a 0.2C rate, and subsequently charging to 4.2 V at a 0.5 C rate and discharging to 2.8 V at a 0.5 C rate. The chamber temperature was 25°C. Here, "C" refers to the discharge rate of a cell, which is defined as the total cell capacity divided by the total discharge time.

The initial charge capacity, initial discharge capacity, and initial coulombic efficiency of the cells manufactured according to Preparation Example 3 using the cathode plates fabricated with the polymers of Examples 1 and 2 and Comparative Examples 1 to 5 were measured, and the results are summarized in Table 3 below.

During the initial formation process, the discharge capacity upon discharging to 2.8 V at a 0.1 C rate and the discharge capacity upon discharging to 2.8 V at a 0.1 C rate were defined as the initial charge capacity and the initial discharge capacity, respectively. The initial coulombic efficiency was calculated using Equation 1 below:

$$\text{Initial coulombic efficiency [\%]} = [\text{initial discharge capacity / initial charge capacity}] \times 100 \qquad \text{<Equation 1>}$$

[Table 3]

| Polymer for binder | Initial charge capacity (mAh/g) | Initial discharge capacity (mAh/g) | Initial coulombic efficiency (%) |
|---|---|---|---|
| Example 1 | 223.05 | 195.42 | 87.61 |
| Example 2 | 222.42 | 194.68 | 87.53 |
| Comparative Example 1 | 221.74 | 193.01 | 87.04 |

(continued)

| Polymer for binder | Initial charge capacity (mAh/g) | Initial discharge capacity (mAh/g) | Initial coulombic efficiency (%) |
|---|---|---|---|
| Comparative Example 2 | 222.24 | 192.54 | 86.64 |
| Comparative Example 3 | 219.35 | 189.08 | 86.20 |
| Comparative Example 4 | 221.78 | 194.02 | 87.48 |
| Comparative Example 5 | 218.75 | 190.13 | 86.91 |

As shown in Table 3 above, the cells manufactured according to Preparation Example 3 using the cathode plates fabricated with the polymers of Examples 1 and 2 exhibited an initial charge capacity of equal to or greater than 222 mAh/g, an initial discharge capacity of equal to or greater than 194 mAh/g, and an initial coulombic efficiency of equal to or greater than 87.5%.

It was confirmed that the cells manufactured according to Preparation Example 3 using the cathode plates fabricated with the polymers of Examples 1 and 2 provided improvements in initial charge capacity, initial discharge capacity, and initial coulombic efficiency compared to the cells manufactured using the cathode plates fabricated with the polyamide polymer of Comparative Example 4, in which DABA was not used as a monomer, or the PVDF polymer of Comparative Example 5.

Additionally, it was observed that the initial charge capacity, initial discharge capacity, and initial coulombic efficiency decreased as the content of DABA increased in the molar ratio of p-APS to DABA (mol% of p-APS: mol% of DABA).

That is, the cells manufactured according to Preparation Example 3 using the cathode plates fabricated with the polymers of Comparative Examples 1 to 3, in which the molar ratio of p-APS to DABA ranged from 5:5 to 1:9, were found to exhibit lower initial charge capacity, initial discharge capacity, and initial coulombic efficiency than those manufactured using the cathode plates fabricated with the polymers of Examples 1 and 2.

Consequently, it was confirmed that the binder of the present disclosure, including the polyamide polymer with an appropriately controlled molar ratio of p-APS to DABA, achieved improvement in adhesiveness characteristics.

Furthermore, it was confirmed that the application of the binder including the polyamide polymer of the present disclosure led to enhancement in characteristics of the second battery.

The scope of the present disclosure is defined by the accompanying claims rather than the description which is presented above, and all of changes and modifications obtained from the meaning and range of claims and equivalent concepts should be construed as being included in the scope of the present disclosure.

## Industrial Applicability

A binder for a cathode according to the present disclosure exhibits excellent adhesiveness characteristics, thereby improving the electrochemical characteristics of a secondary battery.

Additionally, the binder according to the present disclosure does not generate harmful gases (e.g., hydrogen fluoride) even after prolonged exposure to alkaline conditions, thereby improving the stability and cycle life of a secondary battery.

Furthermore, the improved adhesiveness of the binder according to the present disclosure enables a reduction in binder content while increasing the contents of active material and conductive agent, thereby providing a lithium secondary battery with high energy density at low cost.

## Claims

**1.** A polyamide polymer, comprising:

a diamine monomer unit including a sulfone;
a diamine monomer unit including a carboxylic acid; and
a monomer unit including at least one aromatic ring.

**2.** The polyamide polymer of claim 1, wherein a monomer that forms the monomer unit including the sulfone through polymerization is bis(4-aminophenyl)sulfone, bis(3-aminophenyl)sulfone, 3,3'-diaminophenyl sulfone, 3,4'-diaminophenyl sulfone, 4,4'-diaminophenyl sulfone, 1,3-bis(3-aminophenyl sulfone)benzene, 1,3-bis(3-aminophenyl) sul-

fone, 1,3-bis(4-aminophenyl sulfone)benzene, 1,3-bis(4-aminophenyl) sulfone, 1,4-bis(4-aminophenyl sulfone)benzene, 1,4-bis(4-aminophenyl) sulfone, bis[3-(3-aminophenoxy)phenyl]sulfone, bis[3-(4-aminophenoxy)phenyl]sulfone, bis[4-(3-aminophenoxy)phenyl]sulfone, bis[4-(4-aminophenoxy)phenyl)sulfone, or a combination thereof.

**3.** The polyamide polymer of claim 1, wherein a monomer that forms the diamine monomer unit including the carboxylic acid through polymerization is 3,5-diaminobenzoic acid (DABA).

**4.** The polyamide polymer of claim 1, wherein a monomer that forms the monomer unit including the at least one aromatic ring through polymerization is a terephthaloyl chloride monomer, an isophthaloyl chloride monomer, a phthalic acid monomer, an isophthalic acid monomer, a terephthalic acid monomer, or a combination thereof.

**5.** The polyamide polymer of claim 1, wherein a molar ratio of the diamine monomer including the sulfone to the diamine monomer including the carboxylic acid used in polymerization of the polyamide polymer (mol% of the diamine monomer including the sulfone: mol% of the diamine monomer including the carboxylic acid) is 9.9:0.1 to 6:4.

**6.** The polyamide polymer of claim 1, wherein the polyamide polymer includes a monomer repeating unit represented by Formula 1 below:

[Formula 1]

$$-\left[-\overset{O}{\overset{\|}{C}}-X_1-\overset{O}{\overset{\|}{C}}-\right]_n\left[-NH-X_2-NH-\right]_m-$$

wherein, in Formula 1 above,

$X_1$ includes at least one aromatic ring substituted with a halogen element, hydrogen, a hydroxyl group, a carboxyl group, a linear or branched hydrocarbon group having 1 to 4 carbon atoms, or a combination thereof,
$X_2$ includes: two aromatic rings connected to each other by $-SO_2-$, the two aromatic rings being substituted with a halogen element, hydrogen, a hydroxyl group, a carboxyl group, a linear or branched hydrocarbon group having 1 to 4 carbon atoms substituted or unsubstituted with a halogen element, or a combination thereof; and an aromatic ring substituted with at least one carboxyl group, and
n+m=1.

**7.** A binder for a cathode, the binder comprising:
the polyamide polymer of any one of claims 1 to 6.

**8.** A cathode slurry, comprising:

the binder of claim 7; and
a cathode active material.

**9.** A cathode, comprising:

a current collector; and
a cathode active material layer formed on the current collector and including the binder of claim 7.

**10.** A secondary battery, comprising:
the cathode of claim 9.

(a)
(b)
Gelation

Figure 1

## INTERNATIONAL SEARCH REPORT

International application No.
**PCT/KR2024/096467**

**A. CLASSIFICATION OF SUBJECT MATTER**

**C08G 69/32**(2006.01)i; **C08G 69/42**(2006.01)i; **H01M 4/62**(2006.01)i; **H01M 4/13**(2010.01)i; **H01M 10/052**(2010.01)i; **H01M 4/02**(2006.01)i

According to International Patent Classification (IPC) or to both national classification and IPC

**B. FIELDS SEARCHED**

Minimum documentation searched (classification system followed by classification symbols)

C08G 69/32(2006.01); H01M 10/052(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal), STN (Registry, Caplus), Google & keywords: 폴리아미드(polyamide), 양극(cathode), 바인더(binder), 이차전지(secondary battery), 디아민(diamine), 술폰(sulfone), 카르복실산(carboxylic acid)

**C. DOCUMENTS CONSIDERED TO BE RELEVANT**

| Category* | Citation of document, with indication, where appropriate, of the relevant passages | Relevant to claim No. |
|---|---|---|
| X | JP 64-030607 A (TOYOBO CO., LTD.) 01 February 1989 (1989-02-01) See the claims; pages 6 and 7; and table 1. | 1-6 |
| A | | 7-10 |
| X | JP 64–018411 A (TOYOBO CO., LTD.) 23 January 1989 (1989-01-23) See claims 1-4; and pages 7-10. | 1-6 |
| X | JP 62-176506 A (TOYOBO CO., LTD.) 03 August 1987 (1987-08-03) See claims 1 and 2; pages 6 and 7; and table 1. | 1-6 |
| X | KONAGAYA, S. et al. Synthesis of ternary copolyamides from aromatic diamine (m-phenylenediamine, diaminodiphenylsulfone), aromatic diamine with carboxyl or sulfonic group (3,5-diaminobenzoic acid, 2, 4-diaminobenzenesulfonic acid), and iso- or terephthaloyl chloride. Journal of applied polymer science. 2000, vol. 76, pp. 913-920. See abstract; pages 914-916; and figure 1. | 1-6 |

☑ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **13 February 2025** | **13 February 2025** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

International application No.
**PCT/KR2024/096467**

**C. DOCUMENTS CONSIDERED TO BE RELEVANT**

| Category* | Citation of document, with indication, where appropriate, of the relevant passages | Relevant to claim No. |
|---|---|---|
| X | KONAGAYA, S. et al. Reverse osmosis performance and chlorine resistance of new ternary aromatic copolyamides comprising 3,3′-diaminodiphenylsulfone and a comonomer with a carboxyl group. Journal of applied polymer science. 2001, vol. 80, pp. 505-513. See abstract; pages 506-508; figure 1; and table I. | 1-6 |
| A | KR 10-2395841 B1 (IPI TECH INC) 09 May 2022 (2022-05-09) See claims 1-4, 6 and 8-11. | 1-10 |

Form PCT/ISA/210 (second sheet) (July 2022)

**INTERNATIONAL SEARCH REPORT**
**Information on patent family members**

International application No.
**PCT/KR2024/096467**

| Patent document cited in search report | | | Publication date (day/month/year) | Patent family member(s) | | | Publication date (day/month/year) |
|---|---|---|---|---|---|---|---|
| JP | 64-030607 | A | 01 February 1989 | JP | 7114942 | B2 | 13 December 1995 |
| JP | 64–018411 | A | 23 January 1989 | JP | 2522312 | B2 | 07 August 1996 |
| JP | 62-176506 | A | 03 August 1987 | JP | 05-59776 | B2 | 31 August 1993 |
| KR | 10-2395841 | B1 | 09 May 2022 | CN | 118043380 | A | 14 May 2024 |
| | | | | US | 2024-0392071 | A1 | 28 November 2024 |
| | | | | WO | 2023-054878 | A1 | 06 April 2023 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- KR 1020160040125